# EUROPEAN PATENT APPLICATION

(11) **EP 4 436 021 A1**
(43) Date of publication of application: **25.09.2024**
(21) Application number: 24164398.0
(22) Date of filing: 19.03.2024
(51) Int. Cl.: H02M 1/15, H02M 5/458, H02M 7/483, H02M 7/487, H02M 1/00, H02P 1/00

(54) **AC-DC-AC CONVERTER FOR MOTOR DRIVE APPLICATIONS**

(30) Priority: 23.03.2023 US 202318188699
(71) Applicant: GE Energy Power Conversion Technology Ltd, Rugby, Warwickshire CV21 1BD (GB)
(72) Inventor: ZHOU, Zhi, Niskayuna, NY 12309 (US); BASIC, Duro, 91140 Villebon-sur-Yvette (FR)
(74) Representative: Serjeants LLP

(57) **Abstract**

An AC-DC-AC converter (1) for delivering power to an electric motor (3) from a power source (2) is described. The AC-DC-AC converter (1) comprises a front-end converter (10) and a motor-end converter (11) connected through a DC link (4). The DC link voltage is generated and controlled by the front-end converter (10).

## Description

### FIELD OF THE INVENTION

The invention relates to modular multilevel converters and more precisely, to such modular multilevel converters powering up an electric motor, notably during startup.

### BACKGROUND OF THE INVENTION

MMC-based motor drive is capable of powering and driving different kind of motors in an efficient manner. However, such motor drives present issues when a torque has to be generated, in particular during motor startup. Because of this challenge, MMC-based motor drive has been limited to low torque applications, like fans or pumps.

"Review on low-frequency ripple suppression methods for MMCs for medium-voltage drive applications," IET Power Electron., 2018, Vol. 11, Issue 15, pp. 2403-2414 describes the challenges of an MMC-based motor drive for low frequency operation during motor startup. One of those challenges resides in the voltage ripple appearing in the MMC submodules.

The submodule (SM) capacitor voltage ripple is proportional to the DC link voltage and inversely proportional to the motor frequency or speed.

During motor startup, the frequency / speed is low while the motor torque is constant. If the DC link voltage remains or is the same as the voltage in steady state operation, the voltage ripple becomes large and cannot be tolerated during startup.

In order to reduce the voltage ripple during motor startup, a number of methods have been reviewed and summarized in prior arts, including high frequency harmonics injections and variable DC link voltage. The harmonics injections are usually complicated with limited benefit. The variable DC link voltage method is, however, more effective and relatively easier to implement with a right topology.

In prior arts, the variable DC link voltage was not generated by the front-end converter, it was rather accomplished by adding an extra external DC chopper at the DC link in line with the motor-end and front-end converters. A particular interest of this invention is that if the DC link voltage Vdc is adjusted accordingly with respect to frequency to maintain a constant ratio of Vdc/f, the voltage ripple will be kept low and constant. This is especially important in low frequency operation such as a motor startup, overcoming the issue, challenges and limitations of the traditional MMC for motor drive applications.

Despites the solution for indirect AC-DC-AC conversion for motor drive applications provided by prior arts, there is a need for an improved alternative in terms of performance and cost. There is also a need for optimized topologies of both the front-end and the motor-end converters being able to satisfy both steady state and startup operation.

### SUMMARY OF THE INVENTION

An object of the invention is an AC-DC-AC converter for delivering power to an electric motor from a power source, the AC-DC-AC converter comprising a front-end converter and a motor-end converter connected through a DC link, the DC link voltage being generated and controlled by the front-end converter. This AC-DC-AC converter is advantageous because it enables MMC-based motor drive for both startup and steady state operations.

In a first embodiment, the front-end converter is a modular multilevel converter and the motor-end converter is a hybrid modular multilevel converter.

In a second embodiment, the front-end converter is a hybrid modular multilevel converter and the motor-end converter is a modular multilevel converter.

In a third embodiment, the front-end converter and the motor-end converter are hybrid modular multilevel converters.

In those embodiments, the front-end converter is operating so that the DC link voltage is controlled as a function of the motor frequency, as a function of the motor speed or as a function of the motor AC voltage.

In a fourth embodiment, the front-end converter is operating so that the DC link voltage is controlled to a constant value during steady state operation.

Another object of the invention is an AC-DC-AC converter for delivering power to an electric motor from a power source, the AC-DC-AC converter comprising a front-end converter and a motor-end converter connected through a DC link, the front-end converter operating so that the DC link voltage is constant.

The invention is also aimed toward different embodiments of a hybrid modular multilevel converter.

In a first embodiment, the hybrid modular multilevel converter comprises at least one leg, each leg being connected to an AC connection and to three DC connections, each leg comprising at least four controllable switches of a plurality of controllable switches and two branches, a first end of a first controllable switch connected to a first DC connection, a first end of a second controllable switch connected to a second end of the first controllable switch, the second end of the second controllable switch connected to a second DC connection, a first end of a third controllable switch connected to a second end of the second controllable switch and to the second DC connection, a first end of a fourth controllable switch connected to a second end of the third controllable switch, a second end of the fourth controllable switch is connected to the third DC connection, the first branch comprising at least one submodule of a plurality of submodules connected in series , the first branch being connected by a first submodule to a second end of the first controllable switch and to a first end of the second controllable switch, the first branch being connected to the AC connection, the second branch comprising at least one submodule of a plurality of submodules connected in series, the second branch being connected by a first submodule to a second end of the third controllable switch and to a first end of the fourth controllable switch, the second branch being connected to the AC connection.

In a preferred mode of realization of the first embodiment, the submodules are controllable switches in a full-bridge configuration or hybrid configuration for applications where the DC link voltage is less than the peak / maximum AC phase voltage; or in a half-bridge configuration for applications where the DC link voltage is greater than the peak / maximum AC phase voltage.

In a second embodiment, the hybrid modular multilevel converter comprises at least one leg, each leg being connected to an AC connection and to three DC connections, each leg comprising at least two pairs of controllable switches of a plurality of pairs of controllable switches connected in series with opposite polarities, at least two controllable switches of a plurality of controllable switches connected in series, a first end of a first controllable switch of the first pair of controllable switches connected to a first DC connection, a second end of a second controllable switch of the first pair of controllable switches is connected to the second end of the first controllable switch of the first pair of controllable switches, a first end of a third controllable switch is connected to the first end of the second controllable switch of the first pair of controllable switches, the second end of the third controllable switch is connected to the AC connection, a first end of a fourth controllable switch of the second pair of controllable switches is connected to a third DC connection, a second end of a fifth controllable switch of the second pair of controllable switches is connected to a second end of the fourth controllable switch of the second pair of controllable switches, a second end of a sixth controllable switch is connected to the first end of the fifth controllable switch of the second pair of controllable switches, a first end of the sixth controllable switch is connected to the AC connection, the first branch comprising at least one submodule of a plurality of submodules connected in series, the first branch being connected by a first submodule to the first end of the second controllable switch of the first pair of controllable switches and to the first end of the third controllable switch, the first branch being connected to the second DC connection, the second branch comprising at least one submodule of a plurality of submodules connected in series, the second branch being connected by a first submodule to the first end of the fifth controllable switch of the second pair of controllable switches and to the second end of the sixth controllable switch, the second branch being connected to the second DC connection.

In a preferred mode of realization of the second embodiment, the submodules are controllable switches in a half-bridge configuration.

In a third embodiment, the hybrid modular multilevel converter comprises at least one leg, each leg being connected to an AC connection and to three DC connections, each leg comprises at least four controllable switches of a plurality of controllable switches and two branches, a first branch comprising at least one submodule of a plurality of submodules connected in series, the first branch being connected to the first DC connection, a first submodule of the first branch being connected to a first end of a first controllable switch and to a first end of a third controllable switch, a second branch comprising at least one submodule of a plurality of submodules connected in series, the second branch being connected to the third DC connection, a first submodule of the second branch being connected to the second end of the second controllable switch and to the second end of the fourth controllable switch, the second end of the first controllable switch and the first end of the second controllable switch being connected to the second DC connection, the second end of the third controllable switch and the first end of the fourth controllable switch being connected to the AC connection.

In a preferred mode of realization of the third embodiment, the submodules are controllable switches in a full-bridge configuration or hybrid configuration for applications where the DC link voltage is less than the peak / maximum AC phase voltage; or in a half-bridge configuration for applications where the DC link voltage is greater than the peak / maximum AC phase voltage.

In a variant, an inductor is comprised in each branch of the second and third embodiments of a hybrid modular multilevel converter, the inductor being connected between a submodule of the branch and the DC connection the branch is connected to.

In another variant, an inductor is comprised in each branch of the first embodiment of a hybrid modular multilevel converter, the inductor being connected between a submodule of the branch and the AC connection the branch is connected to.

Additional advantages of the present invention will become readily apparent to those skilled in this art from the following detailed description, wherein only the preferred embodiment of the invention is shown and described, simply by way of illustration of the best mode contemplated of carrying out the invention. As will be realized, the invention is capable of other and different embodiments, and its several details are capable of modifications in various obvious respects, all without departing from the invention. Accordingly, the drawings and description are to be regarded as illustrative in nature, and not as restrictive.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is a first embodiment of the invention employing hybrid modular multilevel converters (HMMC) as both the front-end convert and the motor-end converter,
FIG. 2 illustrates a first hybrid modular multilevel converter variant,
FIG. 3 illustrates a second hybrid modular multilevel converter variant,
FIG. 4 illustrates a third hybrid modular multilevel converter variant,
FIG. 5 illustrates a full-bridge submodule variant with controllable switches,
FIG. 6 illustrates a hybrid full-bridge submodule variant with controllable switches,
FIG. 7 illustrates a half-bridge submodule variant with controllable switches,
FIG. 8 illustrates a controllable switch based on a bipolar transistor,
FIG. 9 illustrates a controllable switch based on a MOSFET transistor,
FIG. 10 illustrates a controllable switch based on a silicon-based rectifier,
FIG. 11 illustrates a controllable switch based on two silicon-based rectifiers,
FIG. 12 illustrates a second embodiment of the invention employing a hybrid modular multilevel converter (HMMC) as a front-end converter and a modular multilevel converter (MMC) as a motor-end converter,
FIG. 13 illustrates a modular multilevel converter,
FIG. 14 illustrates a fourth embodiment of the invention employing a modular multilevel converter (MMC) as a front-end converter and a hybrid modular multilevel converter (HMMC) as a motor-end converter,
FIG. 15 illustrates the commutation paths in a first hybrid modular multilevel converter variant employed as a motor-end converter and operating at a first voltage in a three-level DC-DC chopper in series with a multi-level MMC DC-AC converter,
FIG. 16 illustrates the commutation paths in a first hybrid modular multilevel converter variant employed as a motor-end converter and operating at a second voltage in a three-level DC-DC chopper in series with a multi-level MMC DC-AC converter,
FIG. 17 illustrates the commutation paths in a first hybrid modular multilevel converter variant employed as a motor-end converter and operating at a third voltage in a three-level DC-DC chopper in series with a multi-level MMC DC-AC converter,
FIG. 18 illustrates the commutation paths in a first hybrid modular multilevel converter variant employed as a motor-end converter and operating at a first voltage in a two-level DC-DC chopper in series with a multi-level MMC DC-AC converter, and
FIG. 19 illustrates the commutation paths in a first hybrid modular multilevel converter variant employed as a motor-end converter and operating at a second voltage in a two-level DC-DC chopper in series with a multi-level MMC DC-AC converter.

### DETAILED DESCRIPTION OF THE PREFERRED EMBODIMENTS

The following shows preferred examples of the present description. Note that the present description is not limited to the following configurations.

The invention utilizes and optimizes the mixed use of hybrid modular multi-level converter (HMMC) and modular multi-level converter (MMC) as the front-end converter or as the motor-end converter. Specific HMMC options / variants are chosen to optimize performance and cost, based on the steady state rated and startup operations. The front-end converter is designed to generate and control a variable DC link voltage proportional to the motor low frequency or speed while providing a constant current during startup in order to maintain a constant low voltage ripple on the submodule (SM) capacitors. During steady state operation, the front-end converter will maintain a constant rated DC bus voltage.

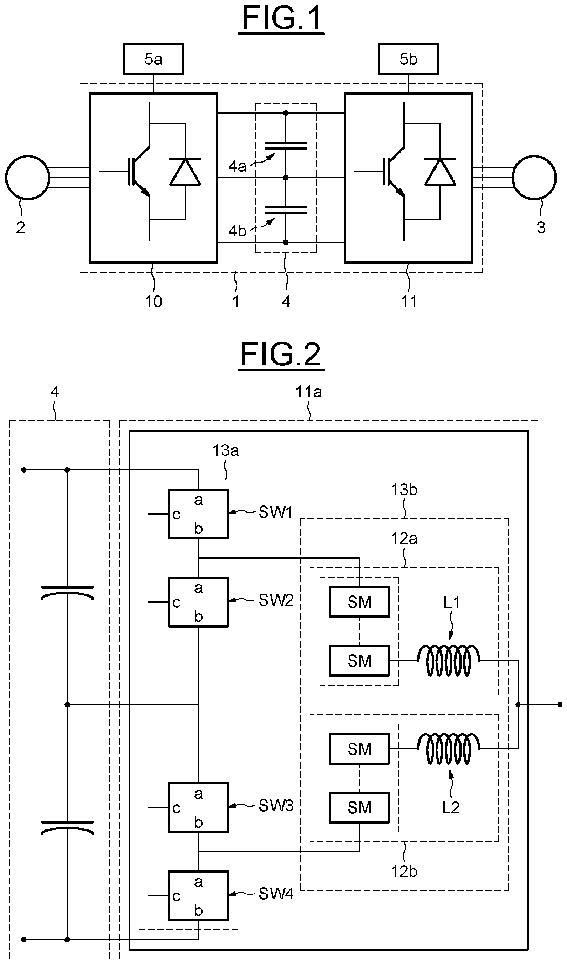

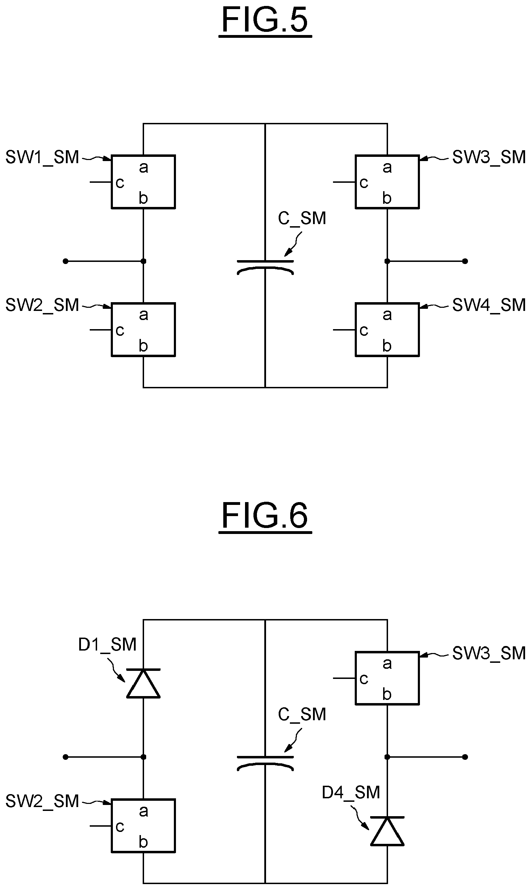

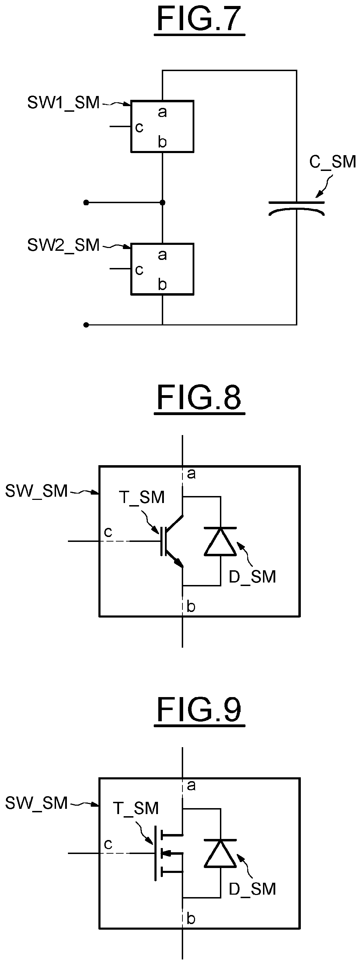

More precisely, this invention offers a hybrid modular multilevel converter (HMMC) as the front-end converter connecting and feeding a motor side motor-end converter in an AC-DC-AC indirect converter for motor drive VFD (acronym for "Variable frequency drive") applications. As shown in FIG. 1, the AC-DC-AC indirect converter 1 consists of an HMMC front-end converter 10 and an HMMC for the motor-end converter 11. The submodules (SMs) used are either full-bridge (FB) modules (FIG. 5) or half bridge modules (FIG.7) depending on specific HMMC topologies as illustrated in FIG. 2, FIG. 3, and FIG. 4. The front-end converter 10 of the back-to-back HMMC-based indirect AC-DC-AC topology is effective in generating a constant DC link voltage while providing power / current to the motor during steady state operation. More importantly, during motor startup, the HMMC front-end converter 10 is able to provide a variable DC link voltage to maintain a contract ratio of Vdc/f in order to keep a low and constant voltage ripple on the submodules SM capacitors. This variable DC link voltage is achieved with the front-end converter 10 without an extra external DC-DC converter or DC chopper.

The AC-DC-AC converter 1 also comprises a first controller 5a for controlling and switching of the controllable switches comprised within the front-end converter 10 and a second controller 5b for controlling and switching of the controllable switches comprised within the motor-end converter 11. Depending on the embodiments, the first controller 5a and the second controller 5b are independent, directly or indirectly linked, or integrated within a same control unit.

FIG. 1 illustrates a first embodiment of the invention of an AC-DC-AC converter 1 feeding power from an AC source 2 to a motor 3 through a DC link 4.

The AC-DC-AC converter 1 comprises a front-end converter 10 connected to the AC power source 2 and a motor-end converter 11 connected to the motor 3. The DC link 4 is connected to the front-end converter 10 outputs and to the motor-end converter 11 inputs.

The front-end converter 10 and the machine-end converter 11 can be any hybrid modular multilevel converter variant.

The output of the front-end converter 10 is connected to the input of the motor-end converter through a DC link 4. The DC link 4 comprises two capacitances 4a,4b connected in series, each simultaneously connected to a pair of DC connections of both the front-end 10 and motor-end 11 hybrid modular multilevel converters.

The key operating modes or mechanisms of this embodiment are:
a. Variable DC link voltage, generated by using, for an example, an HMMC as a front-end converter, feeding and connecting to another HMMC as a machine-/motor-end converter for motor startup operation.
b. During startup, this is equivalent to that the motor drive is fed by a current-source front-end HMMC converter.
c. During normal (non-startup) operation, the front-end converter operates as a regular HMMC, generating and controlling a constant DC link voltage while providing power through the front-end converter 10 to the motor-end converter 11 then to the motor 3.

The AC-DC-AC converter according to the invention is then able to drive a motor during both the startup operation and steady state operation.

A first variant of a hybrid modular multilevel converter is illustrated by FIG. 2. It comprises at least one leg 11a connected to an AC connection and to three DC connections. Each leg 11a comprises a first string 13a comprising at least four controllable switches SW1, SW2, SW3, SW4 of a plurality of controllable switches connected in series and a second string 13b comprising two branches 12a, 12b, each branch 12a, 12b comprising at least one submodule SM of a plurality of submodules (two shown in each branch of 12a or 12b in FIG. 2) and an inductor L1 or L2 in series.

In the present specification, an inductor is to be understood in the broader sense, as an element exhibiting an inductance, or an impedance with an inductance component. The inductance can be either intrinsic or parasitic.

Each controllable switch SW1, SW2, SW3, SW4 comprises a first end, a second end and a control end, respectively labelled a, b and c.

A first controllable switch SW1 is connected by the first end to the first DC connection, and by the second end to the first end of a second controllable switch SW2 and to the second string 13b.

The second end of the second controllable switch SW2 is connected to both the second DC connection and the first end of a third controllable switch SW3. The second end of the third controllable switch SW3 is connected to a first end of the fourth controllable switch SW4 and to the second string 13b.

The second end of the fourth controllable switch SW4 is connected to the third DC connection.

The first branch 12a of the second string 13b is connected by a first submodule SM to the first string 13 a, in particular to the second end of the first controllable switch SW1 and the first end of the second controllable switch SW2.

The second branch 12b of the second string 13b is connected by a first submodule SM to the first string 13a, in particular to the second end of the third controllable switch SW3 and the first end of the fourth controllable switch SW4.

The first branch 12a and the second branch 12b are connected to the AC connection through their respective inductors L1, L2.

Other embodiments of the first hybrid modular multilevel converter variant comprise a different number of legs. In other words, in other embodiments, a first hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In each branch 12a, 12b, the submodules SM are full-bridge submodules (as illustrated in FIG. 5), hybrid full-bridge submodules (as illustrated in FIG. 6) or half-bridge submodules (as illustrated in FIG. 7) or any combination thereof.

In a preferred embodiment, full-bridge submodules or hybrid submodules are used in applications where the DC link voltage is less than the peak / maximum AC phase voltage; or half-bridge submodules are used in applications where the DC link voltage is greater than the peak / maximum AC phase voltage.

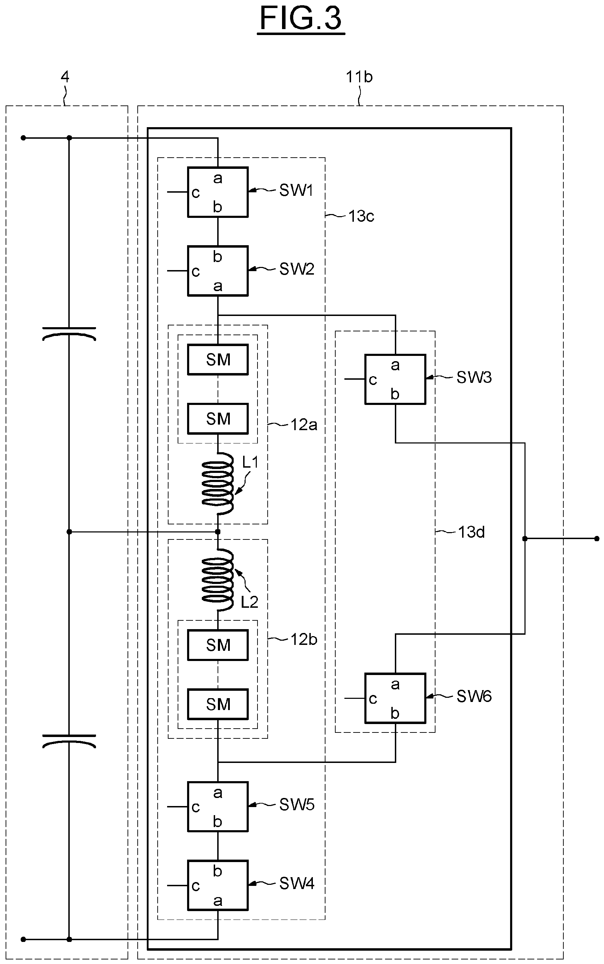

A second variant of a hybrid modular multilevel converter is illustrated by FIG. 3. It comprises a leg 11b connected to an AC connection and to three DC connections.

A leg 11b comprises a first string 13c comprising two branches 12a, 12b, each branch comprising at least one submodule SM of a plurality of submodules (two shown in each branch of 12a, 12b in FIG. 3), at least two pairs of controllable switches, SW1, SW2, SW4, SW5 of a plurality of pairs of controllable switches connected in series with opposite polarities, and an inductor L1 or L2 in series, and a second string 13d comprising at least two controllable switches SW3, SW6 of a plurality of controllable switches connected in series in each switch SW3, SW6 location.

Each controllable switch SW1, SW2, SW3, SW4, SW5, SW6 comprises a first end, a second end and a control end, respectively labelled a, b and c.

In the first string 13c, the first end of the first controllable switch SW1 of the first pair of controllable switches is connected to a first DC connection. The second end of the first controllable switch SW1 of the first pair of controllable switches is connected to the second end of a second controllable switch SW2 of the first pair of controllable switches.

The first end of the second controllable switch SW2 of the first pair of controllable switches is connected to a first submodule SM of the first branch 12a and to the second string 13d.

The first end of a fourth controllable switch SW4 of the second pair of controllable switches is connected to a third DC connection. The second end of the fourth controllable switch SW4 of the second pair of controllable switches is connected to the second end of a fifth controllable switch SW5 of the second pair of controllable switches. The first end of the fifth controllable switch SW5 of the second pair of controllable switches is connected to a first submodule SM of the second branch 12b and to the second string 13d.

The inductor L 1 of the first branch 12a and the inductor L2 of the second branch 12b are connected together to the second DC connection.

In the second string 13d, the first end of the third controllable switch SW3 is connected to the first string 13c, in particular to the first end of the second controllable switch SW2 of the first pair of controllable switches and to the first submodule SM of the first branch 12a.

The second end of the sixth controllable switch SW6 is connected to the first string 13c, in particular to the first end of the fifth controllable switch SW5 of the second pair of controllable switches and to the first submodule SM of the second branch 12b.

The second end of the third controllable switch SW3 and the first end of the sixth controllable switch SW6 are connected together to the AC connection.

Other embodiments of the second hybrid modular multilevel converter variant comprise a different number of legs. In other words, in other embodiments, a second hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections. In each branch 12a, 12b, the submodules SM are full-bridge submodules (as illustrated in FIG. 5), hybrid full-bridge submodules (as illustrated in FIG. 6) or half-bridge submodules (as illustrated in FIG. 7) or any combination thereof.

In a preferred embodiment, the submodules SM are half-bridge submodules as illustrated by FIG. 7.

The second HMMC variant is best suited for applications where DC link voltage is less than the instantaneous max supply / source AC phase voltage. The second HMMC variant is also uniquely designed and optimized for lower cost with the fewest number of components / devices counts.

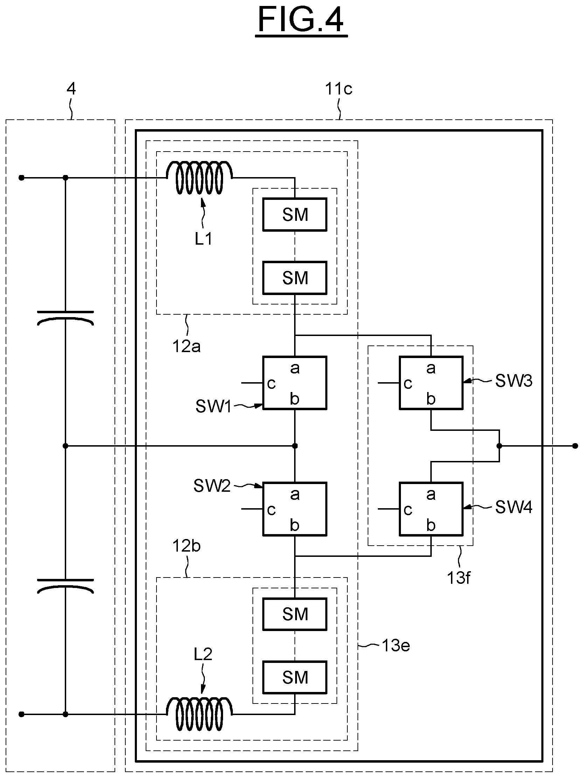

A third variant of a hybrid modular multilevel converter is illustrated by FIG. 4. It comprises a leg 11c connected to an AC connection and to three DC connections.

The leg 11c comprises a first string 13e comprising two branches each connected to at least two controllable switches SW1, SW2 of a plurality of controllable switches connected in series and a second string 13f comprising at least two controllable switches SW3, SW4 of a plurality of controllable switches. Each branch 12a, 12b comprises at least one submodule SM of a plurality of submodules (two shown in each branch of 12a or 12b in FIG. 4) in series and an inductor L1, L2 connected in series.

In the first string 13e, the first branch 12a is connected to the first DC connection by the first inductor L1. The first branch 12a is connected by a first submodule SM to the first end of a first controllable switch SW1 and to the second string 13f.

Also, in the first string 13e, the second branch is connected to the third DC connection by the second inductor L2. The second branch 12b is connected by a first submodule SM to the second end of a second controllable switch SW2 and to the second string 13f.

Still in the first string 13e, the second end of the first controllable switch SW1 is connected to the first end of the second controllable switch SW2 and to the second DC connection.

The second string 13f comprises at least two controllable switches SW3, SW4 of a plurality of controllable switches connected in series in each switch location SW3, SW4. The first end of the third controllable switch SW3 is connected to the first string 13e, in particular to the first end of first controllable switch SW1 and to the first submodule of the first branch 12a.

The second end of the fourth controllable switch SW4 is connected to the first string 13e, in particular to the second end of the second controllable switch SW2 and to the first submodule of the second branch 12b.

The second end of the third controllable switch SW3 and the first end of the fourth controllable switch SW4 are connected to the AC connection.

Other embodiments of the third hybrid modular multilevel converter variant comprise a different number of legs. In other words, in other embodiments, a third hybrid modular multilevel converter variant comprises at least two legs. The first DC connections of the two or multiple legs are connected together, the second DC connections of the two or multiple legs are connected together, and the third DC connections of the two or multiple legs are connected together. The AC connections of the two or multiple legs are independent. They form two or multiple phases of the AC connections.

In either branch 12a, 12b, the submodules SM are full-bridge submodules (as illustrated in FIG. 5), hybrid full-bridge submodules (as illustrated in FIG. 6) or half-bridge submodules (as illustrated in FIG. 7) or any combination thereof.

In a preferred embodiment, full-bridge submodules or hybrid submodules are used in applications where the DC link voltage is less than the peak / maximum AC phase voltage; or half-bridge submodules are used in applications where the DC link voltage is greater than the peak / maximum AC phase voltage.

The different variants of submodules SM will now be described.

A first submodule variant is built upon controllable switches in a full bridge configuration as illustrated in FIG. 5. It comprises two connections, four controllable switches SW1_SM, SW2_SM, SW3_SM, SW4_SM, and a capacitor C_SM.

Each controllable switch SW1_SM,SW2_SM,SW3_SM,SW4_SM comprises a first end, a second end and a control end, respectively labelled a, b and c.

A first submodule connection is connected to the second end of a first controllable switch SW1_SM and to the first end of a second controllable switch SW2_SM.

A second connection is connected to the second end of the third controllable switch SW3_SM and to the first end of the fourth controllable switch SW4_SM.

A first end of the capacitor C_SM is connected to both first ends of the first controllable switch SW1_SM and third controllable switch SW3_SM. A second end of the capacitor C_SM is connected both second ends of the second controllable switch SW2_SM and fourth controllable switch SW4_SM.

In a second variant, the submodule SM is a hybrid submodule based on two controllable switches in a full bridge configuration with diodes, as illustrated in FIG. 6 instead of four controllable switches in a full bridge configuration.

A hybrid submodule essentially corresponds to a regular full bridge submodule wherein the first and fourth controllable switches SW1_SM, SW4_SM are replaced by diodes D1_SM, D4_SM. For the sake of comprehensiveness, FIG. 5 naming scheme is kept. A hybrid submodule comprises two connections, two controllable switches SW2_SM,SW3_SM, two diodes D1_SM, D4_SM and a capacitor C_SM.

A first connection is connected to the first diode D1_SM anode and to a first end of the second controllable switch SW2_SM.

A second connection is connected to the second end of third controllable switch SW3_SM and to the fourth diode D4_SM cathode.

A first connection of the capacitor C_SM is connected on one hand to the first diode D1_SM cathode and to the first end of the third controllable switch SW3_SM. Another connection of the capacitor C_SM is connected to the second end of the second controllable switch SW2_SM and to the fourth diode D4_SM anode.

In a third variant, the submodules SM are controllable switches in a half bridge configuration as illustrated in FIG. 7.

It comprises two connections, two controllable switches SW1_SM,SW2_SM, and a capacitor C_SM. The first connection is connected to the second end of the first controllable switch SW1_SM and to the first end of the second controllable switch SW2_SM. The second connection is connected to the second end of the second controllable switch SW2_SM.

The capacitor C_SM is connected on one hand to the first end of the first controllable switch SW1_SM and on the other hand to both the second connection and the second end of the second controllable switch SW2_SM.

FIG. 8 and FIG. 9 illustrate exemplary embodiments of a controllable switch SW_SM. The controllable switch SW_SM can be any of the controllable switches SW1, SW2, SW3, SW4, SW5, SW6 SW1_SM, SW2_SM, SW3_SM, or SW4_SM comprised in the embodiments described above.

The controllable switch SW_SM comprises a first end, a second end, and a control end, respectively labelled a, b, and c. The first end is connected to the collector / source of a bipolar transistor T_SM, the second end being connected to the emitter / drain of said bipolar transistor T_SM. A freewheeling diode D_SM is connected so that its anode is connected to the transistor T_SM drain, its cathode being connected to the transistor T_SM source. The control end is connected to the transistor T_SM gate.

Other embodiments of the controllable switch SW_SM comprise at least two transistors connected in parallel, in series or in a combination or parallel and series.

The transistor T_SM illustrated in FIG. 8 is a bipolar transistor. However, other kinds of transistors can be used, like for example MOSFETs (acronym for "Metal Oxide Silicon Field Effect Transistor") as pictured in FIG. 9, or IEGTs (acronym for "Injection Enhanced Gate Transistor").

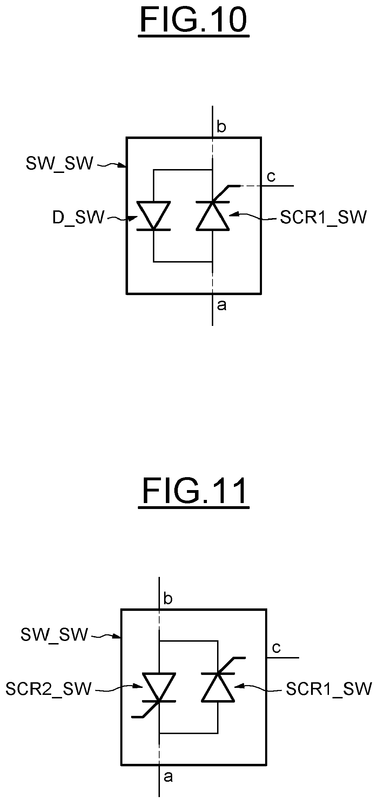

FIG. 10 and FIG. 11 illustrate yet other exemplary embodiments of a controllable switch SW_SW. The controllable switch SW_SW can be any of the controllable switches SW1, SW2, SW3, SW4, SW5, SW6 comprised in the embodiments described above.

The controllable switches SW_SW shown in FIG. 10 and FIG. 11 include an SCR (acronym for "silicon-controlled rectifier") connected to an antiparallel freewheeling diode.

FIG. 10 illustrates a first embodiment of an SCR-based controllable switch SW_SW comprising a silicon-controlled rectifier labelled SCR1_SW and a freewheeling diode D_SW. The first end of the SCR-based controllable switch SW_SW is connected to the anode of the silicon-controlled rectifier SCR1_SW and to the cathode of the freewheeling diode D_SW. The second end of the SCR-based controllable switch SW_SW is connected to the cathode of the SCR SCR1_SW and to the anode of the freewheeling diode D_SW. The control end of the SCR-based controllable switch SW_SW is connected to the gate of the silicon-controlled rectifier SCR1_SW.

FIG. 11 illustrates a second embodiment of an SCR-based controllable switch SW_SW comprising two silicon-controlled rectifiers labelled SCR1_SW and SCR2_SW.

A first end of the SCR-based controllable switch SW_SW is connected to the anode of the first silicon-controlled rectifier SCR1_SW and to the cathode of the second silicon-controlled rectifier SCR2_SW.

The second end of the SCR-based controllable switch SW_SW is connected to the cathode of the first silicon-controlled rectifier SCR1_SW and to the anode of the second silicon-controlled rectifier SCR2_SW.

The control end of the SCR-based controllable switch SW_SW is connected directly or indirectly to the gates of both silicon-controlled rectifier SCR1_SW, SCR2_SW. For instance, one of the silicon-controlled rectifiers can be connected directly while the other is connected through signal processing means. Such signal processing means can be configured to delay a signal by a duration, either a fixed duration or a variable duration, or to trigger the emission of a pulsed width modulated signal upon receiving a command signal. The signal processing means can be configured to generate a command signal based on a multiplexed signal received. Other signal processing means can be used without departing from the scope of the invention.

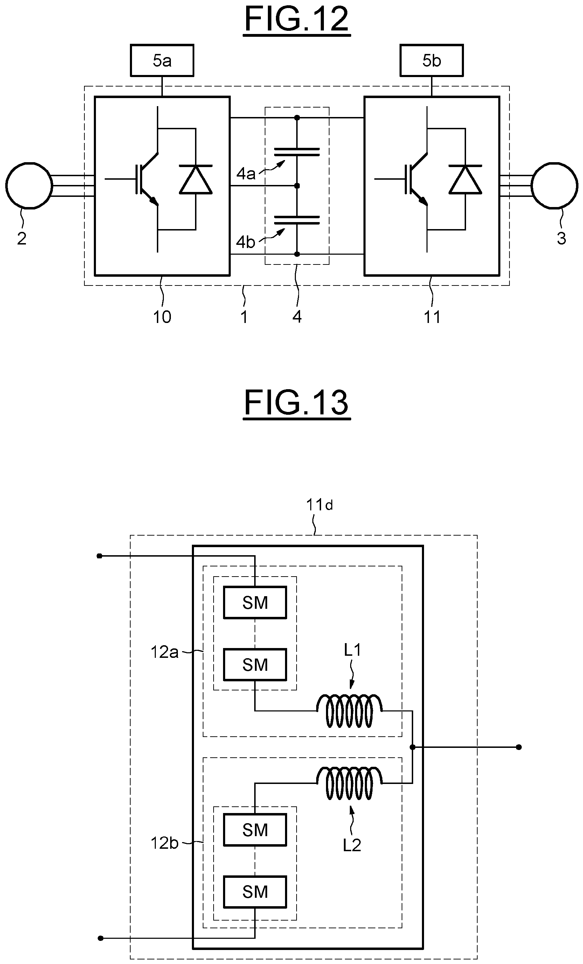

In a second embodiment of the invention, illustrated by FIG. 12, the AC-DC-AC converter 1 can be achieved by using a traditional modular multilevel converter (MMC) as the motor-end converter 11, and by using a hybrid modular multilevel converter as the front-end converter 10. In this second embodiment, it can be noted that the DC link 4 differs sightly from the first embodiment DC link 4. More precisely, a first DC connection of the MMC is connected to the first capacitance 4a, the first capacitance 4a is connected in series to the second capacitance 4b and the second DC connection of the MMC is connected to the second capacitance 4b.

The AC-DC-AC converter 1 comprises a first controller 5a for controlling and switching of the controllable switches comprised within the front-end converter 10 and a second controller 5b for controlling and switching of the controllable switches comprised within the motor-end converter 11. Depending on the embodiments, the first controller 5a and the second controller 5b are independent, directly or indirectly linked, or integrated within a same control unit.

Referring to FIG. 13, a modular multilevel converter MMC will now be described. The MMC comprises at least one leg 11d, each leg 11d being connected to two connections on the DC side and one connection on the AC side. Each leg 11d comprises two branches 12a, 12b, both connected to the AC connection, and each connected to a DC connection. Each branch 12a, 12b comprises at least one submodule SM of a plurality of submodules (two shown in FIG. 13) connected in series to an inductor L1 or L2. The first branch 12a comprising a first inductor L1 is connected to the first DC connection by a submodule SM and to the AC connection through the first inductor L1. The second branch 12b comprising a second inductor L2 is connected to the second DC connection by a submodule SM and to the AC connection through the second inductor L2.

Other embodiments of the modular multilevel converter variant comprise a different number of legs. In other words, in other embodiments, a modular multilevel converter variant comprises at least two legs. The first DC connections of the two or multiple legs are connected together, and the second DC connections of the two or multiple legs are connected together. The AC connections of the two or multiple legs are independent. They form two or multiple phases of the AC connections.

The submodules used in the MMC are full-bridge submodules (as illustrated in FIG. 5), hybrid full-bridge submodules (as illustrated in FIG. 6) or half-bridge submodules (as illustrated in FIG. 7) or any combination thereof.

In a preferred embodiment, full-bridge submodules or hybrid submodules are used in applications where the DC link voltage is less than the peak / maximum AC phase voltage; or half-bridge submodules are used in applications where the DC link voltage is greater than the peak / maximum AC phase voltage.

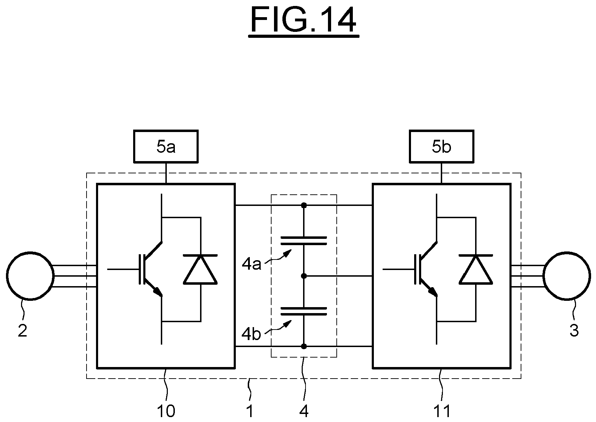

In a third embodiment of the invention, illustrated by FIG. 14, the front-end converter 10 is a modular multilevel converter MMC. The connection of the MMC to the DC link 4 here is similar to the connection of the MMC to the DC link 4 in the second embodiment.

Second and third embodiments provide an improvement above the previous art MMC-MMC topology, thanks to the use of an HMMC either as the front-end converter 10 or as the motor-end converter 11.

The variable DC link voltage is obtained through the following elements:
a) HV switches in the front-end HMMC converter used in line frequency switching operating mode during motor startup,
b) Motor-end HMMC converter regulating the motor AC voltage in sync with variable DC link voltage while providing constant current / power to the motor,
c) During startup, from the motor end, a variable DC voltage or constant current is observed and obtained at the MMC "chain link".

In a hybrid modular multilevel converter operated as an MMC plus either 3L or 2L DC/DC chopper, in particular in the variant illustrated by FIG. 2, the two branches (12a, 12b) are generally called "chain link" (CL).

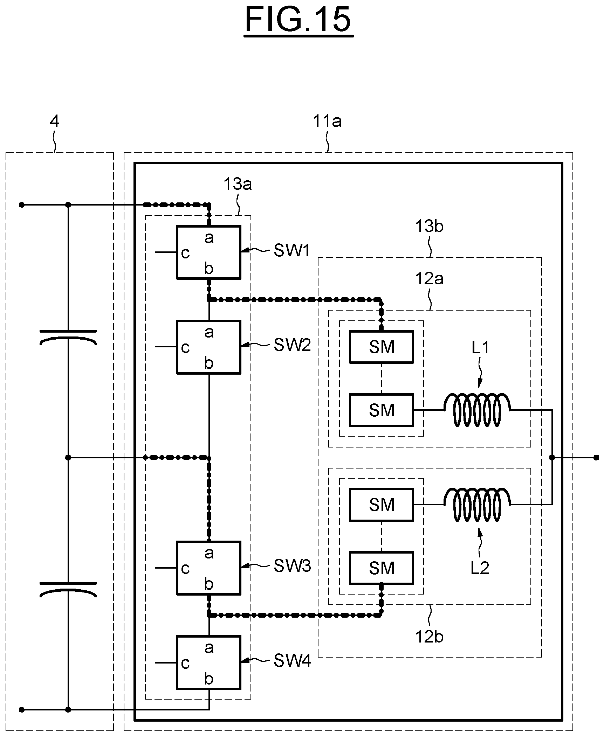

In the embodiment illustrated by FIG. 15, a particular control scheme is applied to a leg 11a of the motor-end converter 11 when the motor-end converter is an HMMC according to the first embodiment, illustrated by FIG. 2.

An HMMC generates an AC voltage for powering the motor out of the voltage provided by the DC link through the three DC connections. The first DC connection is at a first-level +Vdc/2 voltage, the second connection at a second-level Vmid=0 voltage, and the third connection being at a third-level -Vdc/2 voltage. By connecting to the three-level voltages with different durations (duty ratios), a first part (the controllable switches SW1, SW2, SW3, SW4) of the motor-end converter 11 acts as a three-level DC/DC converter / chopper. The motor-end converter 11 HMMC is able to switch between those DC connections in order to generate a variable DC voltage which is then converted by the second part (submodules SMs) of the motor-end converter 11 operating in an MMC mode to generate the required AC voltage for the motor 3. A different control scheme is required depending on the DC connections used in generating the AC voltage. The control scheme is applied by commanding the control end of each HMMC controllable switch, through the second controller 5b, illustrated on FIG. 2.

When the DC voltage required to generate the AC voltage is equal to Vdc/2, the motor-end converter 11 is commanded so that the input voltage is generated by connecting the first DC connection Vdc/2 voltage and the second DC connection Vmid voltage. The DC voltage then results in a Vdc/2 voltage between the branches 12a, 12b of the second leg 13b. The "chopped" DC voltage is then converted in an MMC operating mode by the submodules SM comprised in each of the branches 12a, 12b in order to generate the AC voltage fed to the motor 3.

In order to do so, the first controllable switch SW1 and the third controllable switch SW3 are commanded in a conducting ("on") state while the second controllable switch SW2 and the fourth controllable switch SW4 are commanded in a non-conducting ("off') state.

A first conducting path between the first DC connection and the AC connection is then created through the first controllable switch SW1 and the first branch 12a. A second conducting path between the second DC connection and the AC connection is created through the third controllable switch SW3and the second branch 12b. FIG. 15 illustrates the first conducting path and the second conducting path as lines with a dash-dot pattern.

When the DC voltage required to generate the AC voltage is equal to V=0, the motor-end converter is commanded so that the input voltage is generated by connecting the second DC connection. The second DC connection being at a Vmid=0 voltage. The "chopped" DC voltage is then converted in an MMC operating mode by the submodules SM comprised in each of the branches 12a, 12b in order to generate the AC voltage fed to the motor 3.

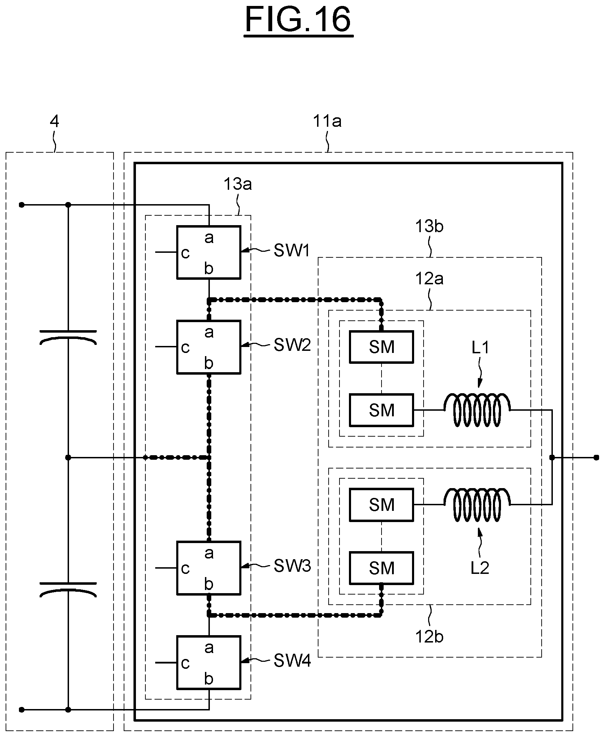

In order to do so, the first controllable switch SW1 and the fourth controllable switch SW4 are commanded in a non-conducting ("off') state while the second controllable switch SW2 and the third controllable switch SW3 are commanded in a conducting ("on") state. A first conducting path between the second DC connection and the AC connection is then created through the second controllable switch SW2 and the first branch 12a. A second conducting path between the second DC connection and the AC connection is created through the third controllable switch SW3 and the second branch 12b. FIG. 16 illustrates the first conducting path and the second conducting path as lines with a dash-dot pattern.

When the voltage required to generate the AC voltage is equal to -Vdc/2, the motor-end converter 11 is commanded to so that the input voltage is generated by connecting the second DC connection voltage and the third DC connection voltage. The DC voltage then results in a - Vdc/2 voltage between the branches 12a, 12b of the second leg 13b. The "chopped" DC voltage is then converted in an MMC operating mode by the submodules SM comprised in each of the branches 12a, 12b in order to generate the AC voltage fed to the motor 3.

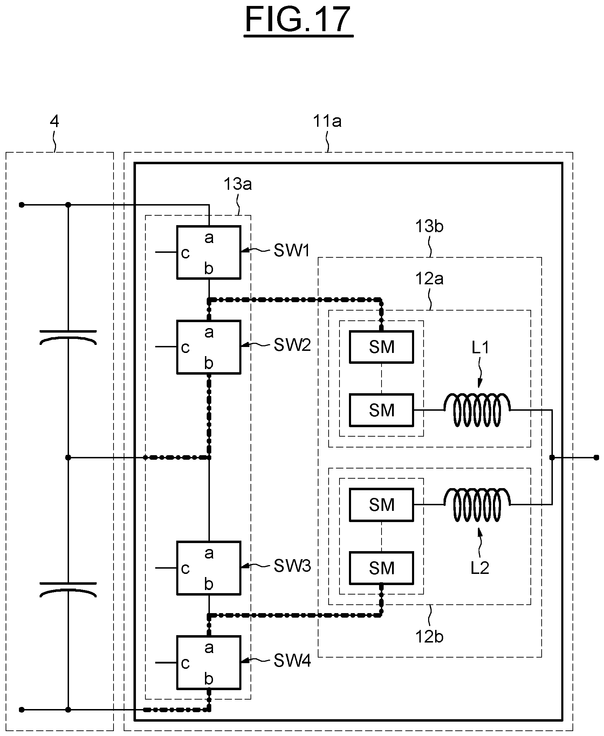

In order to do so, the second controllable switch SW2 and the fourth controllable switch SW4 are commanded in a conducting ("on") state while the first transistor controllable switch SW1 and the third controllable switch SW3 are commanded in a non-conducting ("off') state. A first conducting path between the second DC connection and the AC connection is then created through the second controllable switch SW2 and the first branch 12a. A second conducting path between the third DC connection and the AC connection is created through the fourth controllable switch SW4 and the second branch 12b. FIG. 17 illustrates the first conducting path and the second conducting path as lines with a dash-dot pattern.

Depending on the AC voltage to be fed to the motor 3, the motor-end converter is commanded so that one of the three control scheme is applied.

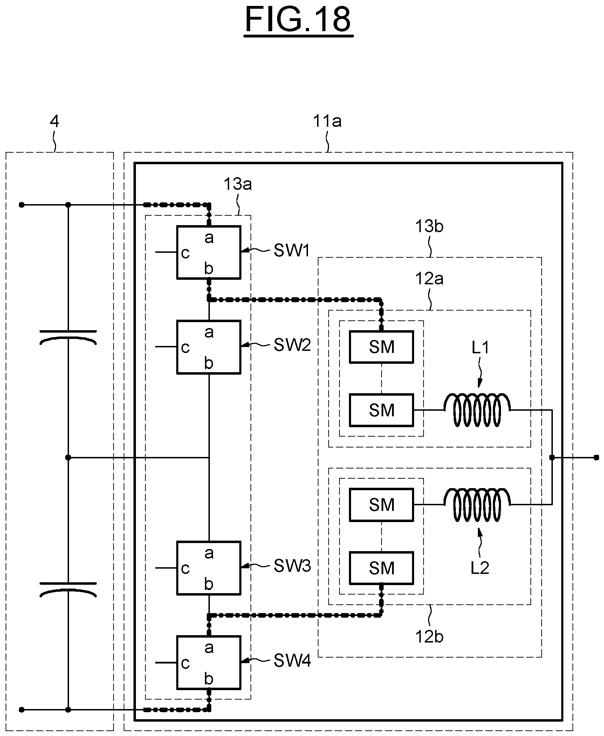

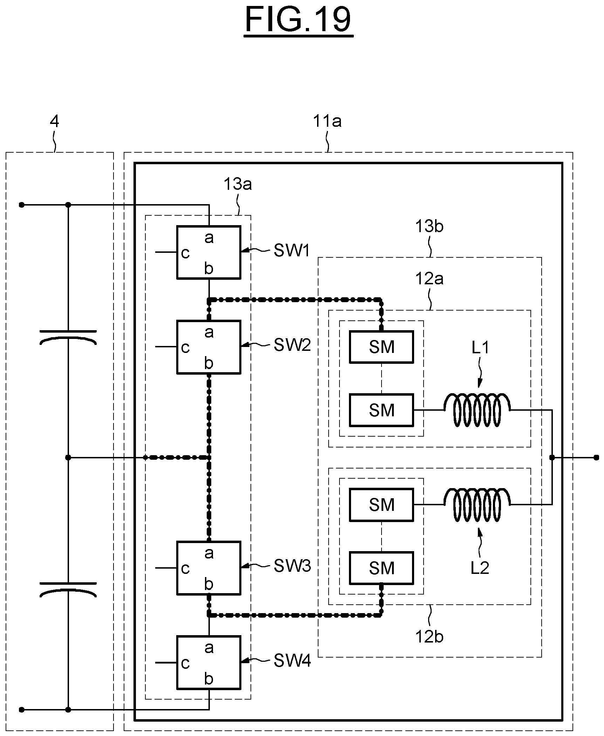

In another embodiment illustrated by FIG. 18 and FIG. 19, the motor-end HMMC 11 can operate in a traditional MMC plus a two-level (2L) chopper mode for DC/DC conversion during startup in order to generate a variable DC voltage at the chain link (CL) as seen from the motor side. The chain link (CL) is to be understood as the branches (12a, 12b) in the second string 13b. This is equivalent to variable DC voltage at the CL and constant current through the CL. By varying the DC voltage at the chain link (CL) as seen from the motor and maintaining a constant ratio of VCL/f, the voltage ripple of submodule capacitors will be controlled to a constant value during startup and throughout the entire operating range including non-startup and steady state operation.

An alternate control scheme is applied in order to deliver a variable DC link voltage performing a two-levels DC/DC conversion by the controllable switches SW1, SW2, SW3, SW4. The variable DC link voltage is then converted in an MMC operating mode by the submodules SM to generate a required AC voltage fed to the motor 3. The two voltage levels are Vdc and 0. FIG. 18 and FIG. 19 illustrate the different conducting paths for achieving the two voltage levels when the motor-end (ME) HMMC operates in an MMC plus 2L DC/DC chopper mode.

When the DC voltage required to generate the AC voltage is equal to Vdc, the motor-end converter 11 is commanded to connect the third DC connection -Vdc/2 voltage and the first DC connection Vdc/2 voltage. The DC voltage then results in a Vdc/2 voltage, across the CL branches 12a, 12b.

In order to do so, the first controllable switch SW1 and the fourth controllable switch SW4 are commanded in a conducting ("on") state while the second controllable switch SW2 and the third controllable switch SW3 are commanded in a non-conducting ("off') state. A first conducting path is then created through the first controllable switch SW1 and the first branch 12a. A second conducting path is created through the fourth controllable switch SW4 and the second branch 12b. FIG. 18 illustrates the two conducting paths as lines with a dash-dot pattern.

When the DC voltage required to generate the AC voltage is equal to V=0, the motor-end converter 11 is commanded to connect the second Vmid connection through two different paths.

In order to do so, the first controllable switch SW1 and the fourth controllable switch SW4 are commanded in a non-conducting ("off') state while the second controllable switch SW2 and the third controllable switch SW3 are commanded in a conducting ("on") state. A first conducting path is then created through the second controllable switch SW2 and the first branch 12a. A second conducting path is created through the third controllable switch SW3 and the second branch 12b. FIG. 19 illustrates the first conducting path and the second conducting path as lines with a dash-dot pattern.

The AC-DC-AC converter as described above is advantageous thanks to its ability to overcome MMCs large voltage ripple at low frequency during motor startup, in particular for drive applications. It is able to provide a small and constant capacitor voltage ripple at low frequency, during motor startup.

It is also advantageous thanks to its compactness, both in volume and footprint along with a reduced weight while offering a higher power density with less losses (higher efficiency than the offering of the previous art).

As an HMMC is used as a front-end converter, the AC-DC-AC converter also offers a variable DC link voltage proportional to the motor speed or frequency along with a constant DC current during low frequency motor startup operations.

## Claims

1. An AC-DC-AC converter (1) for delivering power to an electric motor (3) from a power source (2), the AC-DC-AC converter (1) comprising a front-end converter (10) and a motor-end converter (11) connected through a DC link (4), the DC link voltage being generated and controlled by the front-end converter (10).

2. An AC-DC-AC converter (1) according to claim 1, wherein the front-end converter (10) is a modular multilevel converter, the motor-end converter (11) being a hybrid modular multilevel converter.

3. An AC-DC-AC converter (1) according to claim 1, wherein the front-end converter (10) is a hybrid modular multilevel converter, the motor-end converter (11) being a modular multilevel converter.

4. An AC-DC-AC converter (1) according to claim 1, wherein the front-end converter (10) and the motor-end converter (11) are hybrid modular multilevel converters.

5. An AC-DC-AC converter (1) according to claim 1, wherein the front-end converter (10) is adapted to control the DC link voltage as a function of one of motor frequency, motor speed, and motor AC voltage, or to a constant value during steady state operation.

6. An AC-DC-AC converter (1) according to any of claims 2, 3 or 5, wherein the modular multilevel converter comprises at least one leg (11d), each leg (11d) being connected to an AC connection and to two DC connections, each leg (11d) comprising two branches (12a, 12b), each branch (12a, 12b) comprising at least one submodule (SM) of a plurality of submodules (SM) connected in series and an inductor connected in series (L1, L2), wherein a first branch (12a) comprising the first inductor (L1) is connected to a first DC connection by a submodule (SM) and to the AC connection through the first inductor (L1), the second branch (12b) comprising the second inductor (L2) being connected to a second DC connection by a submodule (SM) and to the AC connection through the second inductor (L2).

7. An AC-DC-AC converter (1) according to any of claims 2 to 5, wherein the or each hybrid modular multilevel converter comprises at least one leg (1 1a), each leg (11a) being connected to an AC connection and to three DC connections, each leg (11a) comprising at least four controllable switches (SW1, SW2, ..., SW4) of a plurality of controllable switches connected in series and two branches (12a, 12b), wherein a first end of a first controllable switch (SW1) is connected to a first DC connection, a first end of a second controllable switch (SW2) is connected to a second end of the first controllable switch (SW1), a second end of the second controllable switch (SW2) is connected to a second DC connection, a first end of a third controllable switch (SW3) is connected to a second end of the second controllable switch (SW2) and to the second DC connection, a first end of a fourth controllable switch (SW4) is connected to a second end of the third controllable switch (SW3), a second end of the fourth controllable switch (SW4) is connected to the third DC connection, wherein the first branch (12a) comprises at least one submodule (SM) of a plurality of submodules connected in series, the first branch (12a) being connected by a first submodule (SM) to the second end of the first controllable switch (SW1) and the first end of the second controllable switch (SW2), the first branch (12a) being connected to the AC connection, wherein the second branch (12b) comprises at least one submodule (SM) of a plurality of submodules connected in series, the second branch (12b) being connected by a first submodule (SM) to the second end of the third controllable switch (SW3) and to the first end of the fourth controllable switch (SW4), the second branch (12b) being connected to the AC connection.

8. An AC-DC-AC converter (1) according to claim 7, wherein each branch (12a, 12b) comprises an inductor (L1, L2) connected between a submodule (SM) of the branch and the AC connection the branch is connected to.

9. An AC-DC-AC converter (1) according to any of claims 2 to 5, wherein the or each hybrid modular multilevel converter comprises at least one leg (11b), each leg (11b) being connected to an AC connection and to three DC connections, each leg (11b) comprising at least two pairs of controllable switches (SW1, SW2, SW4, SW5) of a plurality of pairs of controllable switches connected in series with opposite polarities and at least two controllable switches (SW3, SW6) of a plurality of controllable switches connected in series, wherein a first end of a first controllable switch (SW1) of the first pair of controllable switches (SW1, SW2) is connected to a first DC connection, a second end of a second controllable switch (SW2) of the first pair of controllable switches (SW1, SW2) is connected to the second end of the first controllable switch (SW1) of the first pair of controllable switches (SW1, SW2), a first end of a third controllable switch (SW3) is connected to the first end of the second controllable switch (SW2) of the first pair of controllable switches (SW1, SW2), the second end of the third controllable switch (SW3) is connected to the AC connection, a first end of a fourth controllable switch (SW4) of the second pair of controllable switches (SW4, SW5) is connected to a third DC connection, a second end of a fifth controllable switch (SW5) of the second pair of controllable switches (SW4, SW5) is connected to a second end of the fourth controllable switch (SW4) of the second pair of controllable switches (SW4, SW5), a second end of a sixth controllable switch (SW6) is connected to the first end of the fifth controllable switch (SW5) of the second pair of controllable switches (SW4, SW5), a first end of the sixth controllable switch (SW6) is connected to the AC connection, wherein the first branch (12a) comprises at least one submodule (SM) of a plurality of submodules connected in series, the first branch (12a) being connected by a first submodule (SM) to the first end of the second controllable switch (SW2) of the first pair of controllable switches (SW1, SW2) and to the first end of the third controllable switch (SW3), the first branch (12a) being connected to the second DC connection, wherein the second branch (12b) comprises at least one submodule (SM), the second branch (12b) being connected by a first submodule (SM) to the first end of the fifth controllable switch (SW5) of the second pair of controllable switches (SW4, SW5) and to the second end of the sixth controllable switch (SW6), the second branch (12b) being connected to the second DC connection.

10. An AC-DC-AC converter (1) according to claim 9, wherein each branch (12a, 12b) comprises an inductor (L 1, L2) connected between a submodule (SM) of the branch and the second DC connection.

11. An AC-DC-AC converter (1) according to any of claims 2 to 5, wherein the or each hybrid modular multilevel converter comprises at least one leg (11c), each leg (11c) being connected to an AC connection and to three DC connections, each leg (11c) comprises at least four controllable switches (SW1, SW2, ..., SW4) of a plurality of switches connected in series and two branches (12a, 12b), wherein a first branch (12a) comprises at least one submodule (SM) of a plurality of submodules connected in series, the first branch (12a) being connected to the first DC connection, a first submodule (SM) of the first branch (12a) being connected to a first end of a first controllable switch (SW1) and to a first end of a third controllable switch (SW3), wherein a second branch (12b) comprises at least one submodule (SM) of a plurality of submodules connected in series, the second branch (12b) being connected to the third DC connection, a first submodule (SM) of the second branch (12b) being connected to a second end of a second controllable switch (SW2) and to a second end of a fourth controllable switch (SW4), the second end of the first controllable switch (SW1) and the first end of the second controllable switch (SW2) being connected to the second DC connection, the second end of the third controllable switch (SW3) and the first end of the fourth controllable switch (SW4) being connected to the AC connection.

12. An AC-DC-AC converter (1) according to any of claims 6 to 11, wherein each submodule (SM) is a half-bridge submodule, a full-bridge submodule, or a hybrid full-bridge submodule.

13. An AC-DC-AC converter (1) according to claim 12, wherein each half-bridge submodule comprises a first connection connected to a second end of a first controllable switch (SW1_SM) and to a first end of a second controllable switch (SW2_SM), a second connection connected to a second end of the second controllable switch (SW2_SM), a capacitor (C_SM) connected on one hand to a first end of the first controllable switch (SW1_SM) and on another hand to both the second connection and the second end of the second controllable switch (SW2_SM).

14. An AC-DC-AC converter (1) according to claim 12, wherein each full-bridge submodule comprises a first connection connected to a second end of a first controllable switch (SW1_SM) and to a first end of a second controllable switch (SW2_SM), a second connection connected to a second end of a third controllable switch (SW3_SM) and to a first end of a fourth controllable switch (SW4_SM), a capacitor (C_SM) connected on one hand to a first end of the first controllable switch (SW1_SM) and a first end of the third controllable switch (SW3_SM), and on another hand to a second end of the second controllable switch (SW2_SM) and a second end of the fourth controllable switch (SW4_SM).

15. An AC-DC-AC converter (1) according to claim 12, wherein a hybrid full-bridge submodule comprises a first connection connected to an anode of a first diode (D1_SM) and to a first end of a first controllable switch (SW2_SM), a second connection connected to a second end of a second controllable switch (SW3_SM) and to a cathode of a second diode (D4_SM), a capacitor (C_SM) connected on one hand to cathode of the first diode (D1_SM) and to a first end of the second controllable switch (SW3_SM), and on another hand to a second end of the first controllable switch (SW2_SM) and to an anode of the second diode (D4_SM).
